# EUROPEAN PATENT SPECIFICATION

(11) **EP 4 657 321 B1**
(45) Date of publication and mention of the grant of the patent: **25.11.2026**
(21) Application number: 24178975.9
(22) Date of filing: 30.05.2024
(51) Int. Cl.: G06N 3/0464, G06N 3/0455, G06T 7/12, G06V 10/58, G06V 10/82, G06T 7/174

(54) **SYSTEM AND METHOD FOR SEGMENTATION OF HYPERSPECTRAL IMAGES**
SYSTEM UND VERFAHREN ZUR SEGMENTIERUNG HYPERSPEKTRALER BILDER
SYSTÈME ET PROCÉDÉ DE SEGMENTATION D'IMAGES HYPERSPECTRALES

(43) Date of publication of application: 03.12.2025
(73) Proprietor: University College Dublin, Dublin 4 (IE)
(72) Inventor: WALSH, Jason, Belfield, Dublin 4 (IE); MANGINA, Eleni, Belfield, Dublin 4 (IE); NEGRAO, Sonia, Belfield, Dublin 4 (IE)
(74) Representative: Purdylucey Intellectual Property

(56) References cited:
- CN-A- 117 392 554
- SHIH MIN-SHAO ET AL: "The Automated Detection of Fusarium Wilt on Phalaenopsis Using VIS-NIR and SWIR Hyperspectral Imaging", REMOTE SENSING, vol. 15, no. 17, 25 August 2023 (2023-08-25), CH, pages 4174, XP093215346, ISSN: 2072-4292, DOI: 10.3390/rs15174174
- YUAN KUNHAO ET AL: "Deep-Learning-Based Multispectral Satellite Image Segmentation for Water Body Detection", IEEE JOURNAL OF SELECTED TOPICS IN APPLIED EARTH OBSERVATIONS AND REMOTE SENSING, IEEE, USA, vol. 14, 21 July 2021 (2021-07-21), pages 7422 - 7434, XP011868592, ISSN: 1939-1404, [retrieved on 20210803], DOI: 10.1109/JSTARS.2021.3098678

## Description

### Field

The present invention relates to hyperspectral imaging, and more specifically to image segmentation of hyperspectral images for extracting and identifying various objects.

### Background

Plant phenotyping is the measurement and analysis of observable plant characteristics, crucial in agriculture and plant biology research. Traditional plant phenotyping methods are destructive and involve manually recording measurements, which are time-consuming, labour-intensive, and subject to human error. These drawbacks limit the scale and speed at which phenotypic data can be collected, hindering the progress in understanding plant growth, development, and response to environmental conditions.

The advent of high-throughput phenotyping (HTP) technologies has revolutionised the field by allowing rapid, non-destructive, and automated measurements of plant traits across large populations. HTP leverages advanced imaging technologies, including Red, Green, Blue (RGB) and hyperspectral imaging, to capture detailed plant morphology, physiology, and health information. Despite its advantages, HTP faces significant challenges, particularly in image analysis and segmentation. Accurate segmentation of plant images is critical for extracting meaningful phenotypic information but is hindered by the complex and variable nature of plant structures, overlapping leaves, and varying lighting conditions.

RGB imaging, capturing images in three colour bands, is widely used for its simplicity and effectiveness in many phenotyping applications. However, it cannot often provide detailed information on plant physiological traits. In contrast, hyperspectral imaging, encompassing visible near-infrared (VNIR) and short-wave infrared (SWIR) spectra, offers a more comprehensive view of plant characteristics by capturing hundreds of narrow spectral bands. This rich spectral information enables the detection of subtle differences in plant tissues, stress responses, and other traits not visible in RGB images. However, the complexity and high dimensionality of hyperspectral data pose additional challenges for image segmentation and analysis.

The critical role of image segmentation in HTP extends beyond the fundamental separation of plant material from the background. It is the foundation for the accuracy and reliability of trait extraction processes. This, in turn, determines the quality of insights derived from phenotyping studies, directly influencing the understanding of plant genetics, growth patterns, and responses to environmental stresses. Segmentation challenges arise from the inherent complexity of plant structures, which vary among species and within individual plants over time. The dynamic nature of plant growth and environmental factors such as lighting and background variability further complicate the task. Overlapping plant parts, such as leaves and stems, can obscure critical phenotypic features, making it difficult for standard segmentation techniques, such as binary thresholding, to delineate and quantify them accurately. Additionally, the diverse array of plant species, each with its unique morphological characteristics, necessitates a segmentation approach that is both robust
and adaptable across different contexts and growth stages.

In diverse sectors, notably remote sensing, an imperative demand exists for precise segmentation and analysis of imagery obtained from the VNIR and SWIR imaging sensors. These spectral images contain important features (phenotypic traits) vital for conducting thorough and precise analyses. However, traditional image segmentation frameworks frequently exhibit limitations in effectively extracting and processing data from these disparate spectral images, often resulting in less-than-optimal segmentation outcomes.

CN 117 392 554 A relates to automatic detection of water bodies involving multi-spectral image segmentation based on Deep Convolutional Neural Networks.

### Summary

According to the invention there is provided, as set out in the appended claims, a computer-implemented method for performing image segmentation of hyperspectral images, that includes capturing a VNIR image of an object using a VNIR image sensor, capturing a SWIR image of an object using a SWIR image sensor, and providing a deep learning network (DNN) model that is configured to: receive the captured VNIR and SWIR images independently through two inputs of a dual-input channel; encode the VNIR image through a VNIR encoding path to perform feature extraction and generate corresponding VNIR feature map; encode the SWIR image through a SWIR encoding path to perform feature extraction and generate corresponding SWIR feature map; combine the VNIR and SWIR feature maps through a fusion layer, to generate a fusion feature map, wherein the fusion feature map is generated by performing element-wise addition of the VNIR and SWIR feature maps; decode the fusion feature map through a single decoding path that includes a series of deconvolution blocks; and generate a binary segmentation map by an output layer based on the decoded feature map, wherein the binary segmentation map enables per-pixel classification for delineating foreground from background of the object.

In an embodiment of the present invention, each of the VNIR and SWIR encoding paths includes a series of convolutional blocks to break down the features of respective captured image, and wherein each encoder block performs a depth-wise spatial convolution followed by a point-wise convolution.

In an embodiment of the present invention, each input channel of the dual-input channel receives an RGB image of dimensions *Hx Wx C* and a binary mask of the RGB image of dimensions *Hx Wx* 1, wherein *C* is the number of channels.

In an embodiment of the present invention, the method further includes comprising providing spatial and channel attention mechanisms in each block of the encoding and decoding paths, wherein the spatial attention mechanism focusses on one or more essential features in the spatial domain, and the channel attention mechanism focus on one or more innovative features in feature channels.

In an embodiment of the present invention, the method further includes providing an edge detection block in final convolution block of each encoding path for processing the feature maps to emphasize edges of the object and precisely delineating boundaries of the object.

In an embodiment of the present invention, the method further includes providing a squeeze and excite (SE) block in the fusion layer, wherein the SE block perform a squeeze operation that aggregates the spatial information of each feature channel into a single vector and an excitation operation that learns a non-linear interaction between feature channels, and recalibrates the channel-wise feature responses.

In an embodiment of the present invention, the method further includes generating one or more optimal configurations of one or more hyperparameters of the DNN model during training, through SCA-ACO optimisation process, wherein the hyperparameters include number of convolutional layers, numbers of filter per layer, pooling size, stride size, activations functions, learning rate, layer configurations, and dropout rates, and wherein the SCA mechanism performs a broad global search across hyperparameter space, and uses mathematical models based on sine and cosine functions to update positions of one or more optimal configurations by minimizing validation loss of the DNN model.

In an embodiment of the present invention, the ACO mechanism conducts a detailed local search within the one or more optimal configurations identified by the SCA component based on the pheromone-based learning mechanism, wherein the ACO mechanism conceptualises an ant colony as a set of solution vectors, each corresponding to a distinct set of hyperparameters, and wherein each ant position within the multidimensional parameter space signifies a unique optimal configuration, and wherein throughout a plurality of iterative cycles, each ant adjusts respective position in response to experimental learning and collective intelligence accumulated by the colony.

In an embodiment of the present invention, the method further includes using a top-view line scanning VNIR imaging sensor for creating hyperspectral cubes of the object using a push-broom technique, wherein the VNIR imaging sensor captures wavelengths ranging from 380 to 900nm on the electromagnetic spectrum.

In an embodiment of the present invention, the method further includes using a top-down line scanning SWIR imaging sensor for creating hypercubes using a push-broom technique, wherein the SWIR imaging sensor captures wavelengths ranging from 900 to 1700nm in the electromagnetic spectrum.

In an embodiment of the present invention, the method further includes performing image augmentation of a pre-defined number of VNIR and SWIR images to artificially increase the total images for training of the DNN model, wherein the image augmentation is performed by applying a series of transformations including rotation, flipping, scaling, shifts, and cropping.

According to the invention there is provided, as set out in the appended claims, a system for performing image segmentation of hyperspectral images. The system includes a memory to store the one or more instructions, a processor to execute the one or more instructions to capture a VNIR image of an object using a VNIR image sensor, capture a SWIR image of an object using a SWIR image sensor, and provide a deep learning network (DNN) model. The DNN model is configured to receive the captured VNIR and SWIR images independently through two inputs of a dual-input channel, encode the VNIR image through a VNIR encoding path to perform feature extraction and generate corresponding VNIR feature map, encode the SWIR image through a SWIR encoding path to perform feature extraction and generate corresponding SWIR feature map, combine the VNIR and SWIR feature maps through a fusion layer, to generate a fusion feature map, wherein the fusion feature map is generated by performing element-wise addition of the VNIR and SWIR feature maps, decode the fusion feature map through a single decoding path that includes a series of deconvolution blocks, and generate a binary segmentation map by an output layer based on the decoded feature map, wherein the binary segmentation map enables per-pixel classification for delineating foreground from background of the object.

Various embodiments of the present invention provide a deep learning network (DNN) model to improve image segmentation for hyperspectral (VNIR and SWIR) images of plants, encompassing a diverse range of species, including monocots, dicots, and gymnosperms. By leveraging deep neural networks (DNN), a robust and versatile segmentation solution is tailored to the complexities of plant images. In an embodiment of the present invention, the DNN model is configured to concurrently process data from VNIR and SWIR spectral images, thereby leveraging the inherent features of each spectral image. The network's dual-input configuration facilitates a more exhaustive extraction and analysis of features, culminating in an enhancement in segmentation accuracy. This augmented capability is especially advantageous in scenarios such as stress monitoring, where evaluating plant health necessitates a nuanced analysis encompassing both VNIR and SWIR images. The ability of the network to synthesise insights from these spectral images addresses a critical requirement in fields where precision and accuracy in image analysis are of utmost importance. This, in turn, contributes significantly to more informed decision-making processes.

The foundation of the DNN model lies in its ability to process images through a sophisticated dual encoder-decoder structure augmented with cutting-edge attention mechanisms and separable convolutions, which are pivotal for reducing computational demands while enhancing the model's ability to focus on relevant features within the images. Further, integrating fusion layers enables the effective combination of VNIR and SWIR data, a task that conventional networks often struggle with due to their inability to process multispectral information synergistically. This integration leads to a richer, more comprehensive feature representation, crucial for precise segmentation. Furthermore, including edge masks in the model's architecture is another pivotal factor. These masks enhance the delineation of intricate details and boundaries within the images, which is especially critical in SWIR data and is often inadequately addressed by traditional methods. The edge masks enhance the model's precision, enabling it to accurately segment intricate patterns and structures that are often challenging for conventional segmentation models.

Furthermore, applying the SCA-ACO for hyperparameter tuning represents a novel approach in this context. This optimisation technique ensures that the network operates with the most effective set of parameters, tailored specifically for the challenges of VNIR and SWIR data segmentation. By meticulously adjusting factors such as learning rate and layer configurations, SCA-ACO contributes to the overall efficiency and effectiveness of the model. Collectively, these features empower the proposed DNN model to outperform existing networks and traditional methods, offering more precise and contextually relevant results in the segmentation of VNIR and SWIR data.

### Brief Description of the Drawings

The invention will be more clearly understood from the following description of an embodiment thereof, given by way of example only, with reference to the accompanying drawings, in which:
FIG.1 illustrates an environment wherein various embodiments of the invention can be practiced;
FIG.2 illustrates an overview of the proposed DNN model, in accordance with an embodiment of the present invention;
FIG.3 illustrates an overview of the operation of the SCA-ACO algorithm used for optimization of the hyperparameters of the DNN model, in accordance with an embodiment of the present invention;
FIG.4A illustrates the visualisation of the operation of sine cosine algorithm with ant colony optimisation (SCA-ACO) for training of the DNN model, in accordance with an embodiment of the present invention; and
FIG.4B illustrates an overview of how the sine cosine algorithm with ant colony optimisation (SCA-ACO) operates within a hybrid segmentation architecture to optimise both global and local hyperparameters, ensuring optimal network performance regardless of data type, in accordance with an embodiment of the present invention.

### Detailed Description of the Drawings

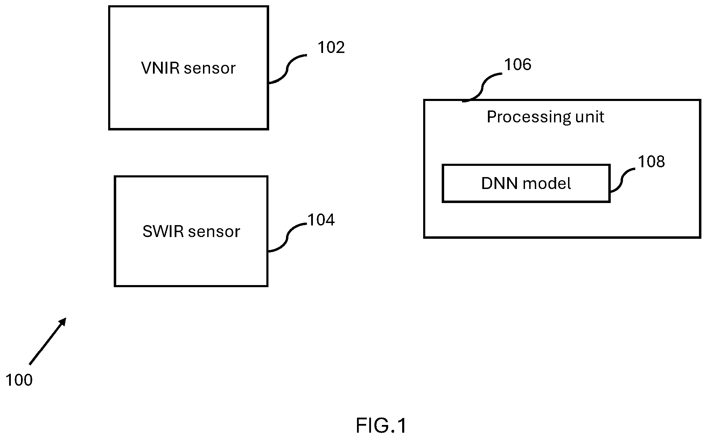

FIG.1 illustrates an environment 100 wherein various embodiments of the invention can be practiced.

The environment 100 includes VNIR and SWIR imaging sensors 102 and 104 for capturing hyperspectral images of objects such as plants, and a processing unit 106 for processing the hyperspectral images.

The processing unit 106 may represent a computational platform that includes components that may be in a server or another computer system, and execute, by way of a processor (e.g., a single or multiple processors) or other hardware described herein. These methods, functions and other processes may be embodied as machine-readable instructions stored on a computer-readable medium, which may be non-transitory, such as hardware storage devices (e.g., RAM (random access memory), ROM (read-only memory), EPROM (erasable, programmable ROM), EEPROM (electrically erasable, programmable ROM), hard drives, and flash memory). The processing unit 106 may execute software instructions or code stored on a non-transitory computer-readable storage medium to perform method and functions that are consistent with that of the present disclosure. In an example, the processing unit 106 may be embodied as a Central Processing Unit (CPU) having one or more Graphics Processing Units (GPUs) executing these software codes.

It is to be noted that acquiring high-quality images is vital for plant phenotyping, as it lays the foundation for accurate analysis and segmentation. An advanced imaging suite provided by Photon Systems Instruments (PSI) has been used herein for acquiring high-quality images. The PSI system contains imaging chambers which house each imaging sensor 102 and 104 for capturing different phenotypic traits of the plant being imaged. These chambers shield plants from external noise as the inner chamber contains consistent lighting conditions, so plants are imaged under uniform and controlled lighting conditions. For the plants to reach each chamber, they are placed on a conveyor belt, which runs through each chamber directly. The chambers have automatic doors on either side and may open once the plant is ready to be imaged by that select sensor. Thus, with this imaging process, potential disruptions may be minimised, ensuring that each plant is exposed to identical environmental conditions during all imaging procedures. With the conveyor belt system, switching between imaging modalities is seamless and efficient without compromising the quality or consistency of the images obtained. The PSI imaging suite significantly enhances the throughput and repeatability of plant phenotyping efforts.

For VNIR imaging, the PSI system uses a top-view line scanning VNIR hyperspectral camera 102, that creates hyperspectral cubes using a push-broom technique. The VNIR imaging sensor 102 captures wavelengths from 380 - 900nm on the electromagnetic spectrum. In an example, each VNIR hyperspectral cube has a spatial resolution of 500px and a spectral resolution of 480px, with each hyperspectral cube stored in a Band Interleaved by line (BIL) format accompanied by its corresponding High Dynamic Range (HDR) file. This sensor's sensitivity to visible and near infrared light allows for the detailed observation of several vegetation indices, such as the normalised difference vegetation index (NDVI) or the photochemical reflectance index (PRI), which are critical for understanding plant physiology and stress responses.

For SWIR images, the PSI system uses a top-down line scanning SWIR hyperspectral camera 104, creating hypercubes using a push-broom technique. The SWIR imaging sensor 104 operates over the electromagnetic spectrum's 900 - 1700nm range. Each SWIR hyperspectral cube has a spatial resolution of 510px and a spectral resolution of 636px, is stored in a BIL format, and is accompanied by its HDR file. The ability of the sensor 104 to penetrate deeper into plant tissues and capture information beyond the visible spectrum makes it invaluable for identifying vegetation indices such as the moisture stress index (MSI) or the normalised difference moisture index (NDMI), each of which is critical for understanding a plants response to water stress.

In an embodiment of the present invention, the processing unit 106 may perform calibration and image resizing to prepare the data for future phases. Each hyperspectral image obtained using VNIR and SWIR image sensors may be calibrated using its accompanying dark and white calibration file. These reference images may be collected each time with individual data image. Once completed, each cube may be stitched together to create a new calibrated hyperspectral image. Given that these hyperspectral images contain a plethora of spectral bands, 3-dimensional image segmentation is a slow and complex procedure. Instead, the processing unit 106 employs a DNN model 108 that is trained to perform 2-dimensional segmentation of the images, by extracting a single RGB slice from each hyperspectral image. In addition to this, each RGB slice from both sensors may be resized to 256x256 to facilitate faster training and optimisation. The DNN model 108 is based on the U-Net architecture widely used for image segmentation tasks, and includes encoder-decoder structure with skip connections.

In an embodiment of the present invention, ground truth data of 50 random images from each VNIR and SWIR sensor may be created for training the DNN model 108. Given that images are going to be used in the DNN model 108 for image segmentation, ground truth data is a crucial component which enables the DNN 108 to learn how to create new segmentation masks (predictions). Without ground truth images, the DNN 108 would fail to learn any information from the provided data. With a large amount of data, creating ground truth masks is a manual task that is laborious and time-consuming. Thus, from each sensor, 50 images may be chosen and segmented by hand using an open-source photo editing software, which provides tools to mask objects. Once an image is successfully masked, the result may be saved in XSF format and exported back to a PNG format. Once selected images are successfully masked, a Python script may be created to binarize each image. The binarization process ensures that each pixel in the image is classified as either part of the foreground (the plant) or the background, thus creating a clear distinction for the DNN 108 to interpret. Typically, ground truth data may be represented by only two pixels in an image for segmentation. These values can be either 0 and 1 or 0 and 255. The binarizing an image to either of these scales separates the object from its background and allows the DNN 108 to learn which area of the image is most important. Although creating ground truth is a laborious task, it is indispensable for the accuracy and efficiency of the DNN 108 in learning to segment new images accurately. This binary representation simplifies the complexity of the images, focusing the learning process on the essential task of distinguishing plant material from the surrounding environment.

It is to be noted that the deep learning methods requires vast data to create accurate segmentations and generalise on unseen images. Since, only 50 images are selected per imaging sensor, image augmentation is being used to artificially increase the total images for training/testing. The image augmentation is an essential step of any preprocessing pipeline, as it allows for the expansion of the dataset without the need for additional original images. The image augmentation may be performed by applying a series of transformations such as rotation, flipping, scaling, shifts, and cropping. The image augmentation introduces variability and diversity into the training set, simulating different viewing conditions and angles. This process not only enhances the robustness of the DL model 108 by exposing them to a broader range of scenarios but also helps prevent overfitting by ensuring the model 108 does not learn to recognise specific images but rather the general features of the object of interest.

In an embodiment of the present invention, the processing unit 106 may apply various augmentation techniques that may be tailored to the characteristics of the plant images captured by the VNIR, and SWIR sensors 102 and 104. The adjustments in brightness and contrast may also be applied to account for potential variations in lighting conditions in real-world settings. Random noise injection may also be used to challenge the model's ability to maintain high segmentation accuracy despite imperfections in the image data. In an example, nine different augmentations may be applied to each image to create 900 new images for the dataset (450 images per sensor). The joining the artificial images to the original data creates a final dataset of 1000 images. It is to be noted that the image augmentation is performed several times to create a new batch of 900 images. This augmentation process is performed after image annotation as both the image and mask need to be augmented using the same techniques.

It is to be noted that by leveraging the augmentation strategies, the dataset, enables the DNN 108 to learn from a significantly enriched pool of images. This approach is critical in compensating for the limited number of original images available for each sensor type, ensuring that the DNN 108 develops a comprehensive understanding of the features relevant to accurate plant image segmentation.

Through this rigorous augmentation process, the model 108 is prepared to perform reliably across a broad spectrum of real-world conditions, significantly advancing the goal of improving image segmentation for high-throughput plant phenotyping.

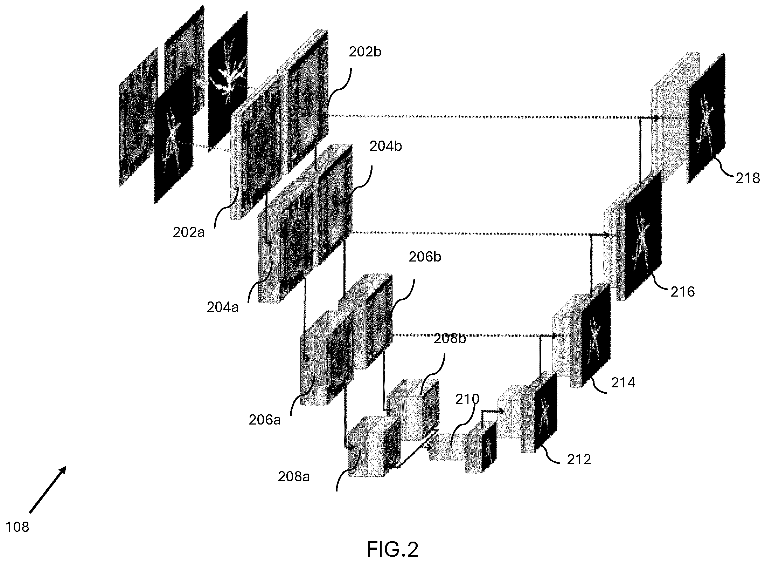

FIG.2 illustrates an overview of the proposed DNN model 108, in accordance with an embodiment of the present invention. The DNN model 108 includes a hybrid U-Net architecture that has a dual channel system, where first and second channels 202a and 202b receive inputs from first and second sensors 102 and 104 respectively. Further, an individual encoder path is provided for each channel, such that each encoder path is formed of a series of encoder blocks to break down the features of the plant images. In each encoder path, the final encoder blocks 208a and 208b converge in a fusion/squeeze-excite block layer 210 which fuses the features from both input channels together. From here, the features are fed into decoder blocks 212, 214 and 216 where segmentation mask is created of one of the input channels.

In an embodiment of the present invention, the DNN model 108 is trained to accurately segment images across different spectral bands, such as VNIR and SWIR imaging sensors, and is central to enhancing plant phenotyping capabilities. The DNN model 108 is configured to handle the complexity of the plant images and powerful enough to produce accurate predictions. In an embodiment of the present invention, the DNN model 108 is generated based on the conventional U-Net architecture, known for its efficiency in image segmentation tasks. This approach is aimed at achieving higher accuracy and efficiency, particularly in the context of complex image analysis scenarios, where small datasets are prevalent.

The DNN model 108 includes an input layer that is split into two input channels 202a and 202b for receiving VNIR and SWIR images separately to fully maximise on the feature extraction phase. As the model 108 follows a hybrid architecture, each of the channels 202a and 202b receive an RGB image of dimensions *Hx Wx* 3 and a binary mask of the RGB image of dimensions *Hx Wx* 1.

The network 108 further includes VNIR and SWIR encoding paths corresponding to two input channels 202a and 202b to process two distinct streams of input data from *VNIR* and *SWIR* spectral bands. The purpose of the encoding paths is to transform raw input data into a lower-dimensional feature space. Each encoding path includes a series of convolutional blocks that extract features at different scales. In an example, the encoder path corresponding to the input channel 202a includes a series of encoder blocks 204a, 206a and 208a, whereas the encoder path corresponding to the input channel 202b includes a series of encoder blocks 204b, 206b and 208b. Each encoder block performs a series of operations such as convolution, pooling, and non-linear activation functions, and learns to extract salient features by adjusting its internal parameters through backpropagation during training.

In an embodiment of the present invention, each encoder block employs *SeparableConv2D* layers instead of traditional convolutional layers. This strategic choice significantly lowers the model's computational complexity and the number of parameters, as *SeparableConv2D* layers divide the convolution operation into a depth-wise spatial convolution followed by a pointwise convolution. Thus, for a given input feature map F with dimensions *D_{F}* × *D_{F}* × *M*, the depthwise convolution applies M filters (one per input channel) of size *K x K* to produce a feature map of dimensions *D_{F}* × *D_{F}* × *M*. This operation can be represented as: ${F}_{d , m}^{′} = {\sum }_{i = 1}^{K} {\sum }_{j = 1}^{K} {F}_{d + i - 1 , d + j - 1 , m} . {K}_{i , j , m}$ (1) where ${F}_{d , m}^{′}$ is the output of the depth-wise convolution at position d in the *m^{th}* channel, and *K_{i,j,m}* is the kernel applied on the *m^{th}* channel.

After this, pointwise convolution then applies 1 × 1 convolution across the channels to combine the depth-wise convolved features, producing an output with dimensions *D_{F}* × *D_{F}* × *N* (where *N* is the new number of channels). This can then be represented as: ${F}_{d , m ′}^{"} = {\sum }_{m = 1}^{M} {F}_{d , m}^{′} . {W}_{m , m ′}$ (2) where ${F}_{d , m}^{"}$, is the output at position d for the *m^{th}* output channel, and *W_{m,m},* represents the pointwise convolutional weights.

In an embodiment of the present invention, each encoder block includes a spatial attention mechanism to focus on essential features in the spatial domain. It combines average pooling and convolutional layers to generate an attention map multiplied by the input feature map for enhanced feature representation. Channel attention mechanisms are designed to enhance the representational power of the network by focussing on the most informative features across the channels of the input feature map. It does this by learning to assign varying levels of importance to each channel, thereby emphasizing more relevant features while suppressing less useful ones.

Moreover, spatial and channel attention mechanisms are embedded within each encoder and decoder blocks. These mechanisms are designed to refine the feature maps by emphasising important spatial regions and feature channels, thereby improving the model's sensitivity to crucial details within the images. The incorporation of attention mechanisms marks a significant departure from traditional U-Net architectures, enabling the DNN model 108 to achieve more nuanced and precise segmentation outcomes.

The spatial and channel attention mechanisms are advanced features in neural network architectures that enhance model performance by focusing on the most informative parts of the input data. The spatial attention mechanism focuses on where the model 108 should pay more attention within the image. It highlights specific regions of the input feature map, allowing the model to concentrate on areas with relevant information while suppressing less useful regions. This mechanism effectively enables the model 108 to dynamically prioritise spatial features across different locations in an image, improving the model's ability to capture and use spatial relationships and features for image segmentation. The spatial attention mechanism in the model 108 can be represented as: $S \left(F\right) = σ \left({f}^{avg}\left(F\right)+{f}^{max}\left(F\right)\right)$ (3) where S(F) is the spatial attention map, σ is the sigmoid function, *f^{avg}* and *f^{max}* are the average and max pooling operations across the channels, respectively.

The channel attention focuses on what specific features the model 108 should prioritise. It differentiates the importance of each channel in the feature maps, allowing the model 108 to emphasise more relevant features while diminishing the less important ones. By doing this, the channel attention mechanisms enable the model 108 to adaptively recalibrate channel-wise feature responses, enhancing its capacity to capture interdependencies among channels and thus, significantly improving the representational power of the network for various tasks. Given that channel attention focuses on the interchannel relationships, it can be mathematically described by first applying global average pooling to generate a channel-wise statistic, followed by a multi-layer perceptron (MLP) with one hidden layer to capture channel-wise dependencies: $C \left(F\right) = MLP \left(AvgPool\left(F\right)\right)$ (4) where *C*(*F*) is the channel attention map, and *AvgPool* represents the global average pooling operation.

Given that plants are complex images and can vary greatly in shape and size, segmentation methods often fail to capture the finer details of plants. To counter this, an edge detection block is provided in the final encoder block for capturing high-resolution boundary details of the plant. The edge detection block processes the feature maps to emphasise edges, which may be then concatenated with the last encoder block's output, enriching the feature set forwarded to the decoder.

After each layer, a feature map is generated and refined through the next encoder block with the spatial/channel attention mechanism to help refine the features extracted. At the final stage of the encoder block, the edge detection block uses the final output of the encoder block as its input. The output of the edge detection block is a new refined feature map which still has the integrity of the encoder blocks feature maps but now highlight the edges within the images processed by the block. The output after the edge detection block is final feature map of the encoder block and is processed through the fusion layer. Thus, the edge detection block would process the feature maps generated by both channels' encoder layers. This means it would work on the abstracted representations of the input images, highlighting edges that have been preserved or emphasized through the convolutional layers.

This enhancement is particularly effective for tasks requiring precise edge delineation, such as segmenting complex shapes or textures within images. The edge detection block allows for the precise delineation of object boundaries, significantly enriching the feature extraction process, and enabling the model 108 to tackle complex image analysis scenarios with heightened efficiency.

Instead of prompting the user for more input data, during data loading edge masks are generated using canny edge detection on the input binary masks. This Sobel-based edge detection is used to generate initial edge masks, which the network 108 then refine through learning. It is to be noted that the edge masks are generated automatically via the training cycle and uploaded to the network which are then used to refine the features extracted via the network through the encoder blocks. Thus, it is used as a final step before data fusion (before the fusion layer and at the end of the encoder layer) to refine the segmentation. The Sobel operator uses two 3x3 kernels which are convolved with the original binary image to calculate approximations of the derivatives - one for horizontal changes, and one for vertical. If A is the original image, the Sobel kernels *Gₓ* (horizontal) and *G_{y}* (vertical) are as follows: ${G}_{x} = \left[\begin{matrix}- 1 & 0 & + 1 \\ - 2 & 0 & + 2 \\ - 1 & 0 & + 1\end{matrix}\right] ∗ A , {G}_{y} = \left[\begin{matrix}- 1 & - 2 & - 1 \\ 0 & 0 & 0 \\ + 1 & + 2 & + 1\end{matrix}\right] ∗ A$ (5)

The asterisk (*) denotes the convolution operation between the kernel and the image. After applying these kernels, the edges in the horizontal and vertical directions are highlighted. After this operation, the magnitude of the gradient vector at each pixel, which represents the strength of the edge at that point, is then calculated by combining these two derivative approximations.

The operation may be conducted using the formula: $G = \sqrt{{G}_{x}^{2} + {G}_{y}^{2}}$ (6)

The formula calculates the Euclidean norm of the gradient vector and represents the gradient magnitude. High values of G indicate significant changes in intensity and correspond to edges in the image. The gradient magnitude image G is then double thresholded to highlight and identify the edges, providing new binary masks where the edges are marked.

With the edge mask, the edge block may first use an operation of convolution to create feature maps. The feature maps may be then normalised using batch normalisation. This step is used to stabilise learning by normalising the input layer by adjusting and scaling the activations. An activation function, typically *ReLU* (can be replaced by others depending on optimisation), is applied to introduce non-linearity to the process, allowing the network 108 to learn more complex patterns.

After activation, another convolutional layer with a single filter and a kernel size of 1*X*1 is used. This reduces the depth of the feature maps to 1, which can be interpreted as the likelihood of each pixel being an edge. Finally, a sigmoid activation function in the last layer squashes the output values to a range between 0 and 1, where each pixel is classified as edge (close to 1) or non-edge (close to 0).

In an embodiment of the present invention, the DNN model 108 includes the fusion layer 210 that combines the features from parallel encoder paths and augment them with edge enhanced features. The fusion layer 210 receives first and second final feature maps *F*₁ and *F*₂ of the same dimensions *H x W x C,* as two inputs from respective final encoder blocks 208a and 208b, and generates an output feature map *Fₒᵤₜ* by performing element-wise addition of the first and second final feature maps. The fusion operation may be represented as follows: ${F}_{out} \left(i, j, k\right) = {F}_{1} \left(i, j, k\right) + {F}_{2} \left(i, j, k\right)$ (7)

Thus, the output feature map *Fₒᵤₜ* combines features from VNIR and SWIR images, by concatenating the output of the VNIR encoder path, enhanced with edge features, with output of the corresponding output of the SWIR encoder path. This fusion improves segmentation accuracy by leveraging the essential features in both VNIR and SWIR images.

This integration may be further refined by a squeeze-and-excite (SE) block which is provided inside the fusion layer 210 and which applies a global feature recalibration, by selectively amplifying important features while suppressing less relevant ones. This mechanism ensures that the decoder blocks operate on a highly refined feature set, enabling superior segmentation accuracy. During fusion, the *SE* block focuses on channel-wise feature recalibration, allowing the model 108 to increase its sensitivity to informative features. The *SE* block is configured to perform two main operations: squeeze and excitation. The SE block is used to recalibrate channel-wise feature responses, effectively allowing the model 108 to perform dynamic channel-wise feature refinement.

The squeeze operation aggregates the spatial information of each channel into a single value, effectively compressing each *H x W x* C feature map into a vector of size *D.* This may be achieved through global average pooling, calculated for each channel c as: ${z}_{c} = \frac{1}{HxW} {\sum }_{i = 1}^{H} {\sum }_{j = 1}^{W} {F}_{in} \left(i, j, c\right)$ (8) where *Fᵢₙ* is the input feature map to the *SE* block and equivalent to *Fₒᵤₜ*(*i, j, k*) of equation 7.

The excitation operation learns a non-linear interaction between channels and recalibrates the channel-wise feature responses by applying two fully connected (*FC*) layers and a non-linear activation function (e.g., *ReLU* followed by sigmoid). The operation can be described as: $s = σ \left({W}_{2}δ\left({W}_{1}z\right)\right)$ (9) where z is the squeezed vector, δ denotes the *ReLU* activation function, σ denotes the sigmoid activation function, *W*₁ and *W*₂ are the weights of the FC layers, respectively, with *W*₁ reducing the dimension of z to a smaller value (e.g., D/r where r is the reduction ratio) and *W*₂ projecting it back to the original dimension D.

Finally, the output of the *SE* block is obtained by rescaling the original feature map *Fᵢₙ* with the activation vector s, performed channel-wise: ${f}_{out} \left(i, j, c\right) = {s}_{c} . {F}_{in} \left(i, j, c\right)$ (10)

This rescaling operation enhances the representational power of the network 108 by adaptively recalibrating channel-wise feature responses, emphasising important features while suppressing less useful ones.

The decoder block first begins with an operation of up-sampling on the fused features *Ffused* which combines edge-enhanced *VNIR* and *SWIR* features. The fused features *Ffused* is equivalent to *fₒᵤₜ*(*i, j, c*) of equation 10. The up-sampling process may upscale the features back to their original input resolution. To do this, the decoder block may first increase the spatial dimensions of the input feature map *Ffused.* This may be done using transposed convolutions. This may be commonly referred to as "deconvolution" as it is the reverse of a convolution operation, increasing the spatial dimensions (height and width) of the input feature maps. This is essential in the decoder part of the network architecture, where the goal is to progressively restore the spatial resolution after it has been reduced in the encoder paths. With transposed convolutions, the goal is to upscale the feature map by a factor of s (scaling factor). This operation can be represented as: $U = Conv 2 DTranspose \left(I, F, s, p\right)$ (11)

Where:
- *U* is the upsampled output.
- *I* is the input feature map.
- *F* is the filter or kernel applied.
- *s* is the stride, which determines the scaling factor.
- *p* is the padding.

After transposed convolution, the next step involves incorporating spatial information from earlier in the network to help the model 108 better localise the segmentation regions. This may be done by concatenating the upsampled features with the features from the corresponding encoder block, which includes both *VNIR* and *SWIR* data. The output which is the concatenated feature map is then up sampled (deconvoluted) through the decoder blocks to create a prediction for one of the image channels (either VNIR or SWIR). Deconvolution continues until the prediction matches the resolution of the input image. This aspect is crucial for maintaining the fidelity of segmentation, allowing for detailed and accurate delineation of the target features within the images. The process known as skip connections are a characteristic feature of the *U - Net* architecture, which allows the network 108 to reuse features from the encoder part at corresponding levels of the decoder. This helps in recovering spatial information lost during downsampling. A resize operation then ensures that the feature maps from the encoder (skip connections) match the dimensions of the decoder's feature maps for concatenation. After this process, the combined feature map may be passed through a convolution block to learn to integrate the features effectively. This involves a separable convolution operation followed by batch normalisation and an activation function to introduce non-linearity.

This operation may be represented as: $R = Activation \left(BatchNorm\left(SepConv\left(C\right)\right)\right)$ (12)

Where:
- *R* is the result after the convolution, batch normalisation, and activation,
- *SepConv* represents the separable convolution operation.
- *BatchNorm* is the batch normalisation.
- Activation represents the *ReLU* activation function.

After a separable convolution operation, batch normalisation and an activation function is applied, the decoder block uses both spatial and channel attention mechanisms to the refined feature maps to further enhance the models focus on important features and suppress less relevant ones. The spatial and channel attention mechanism is applied after the convolution block to recalibrate feature responses. This operation includes applying sigmoid-activated depth-wise separable convolutions for spatial attention and using global pooling followed by dense layers for channel attention. These mechanisms help the model to dynamically adjust the weighting of each feature map's spatial and channel-wise importance. Finally, the final output of the decoder block is a higher-resolution feature map that integrates both up-sampled features and context from skip connections, refined through convolutions and enhanced by attention mechanisms.

The model 108 includes an output layer 218 which includes a Conv2D layer with a sigmoid activation function, producing the (256, 256, 1) segmentation map. This configuration is carefully engineered to generate a binary segmentation map, enabling per-pixel classification that delineates foreground (plant) from background elements (e.g., machinery, soil). By employing a singular filter and maintaining the spatial dimensions identical to the input through "same" padding, this layer 218 effectively consolidates the multi-scale, deeply processed features into a probability map. Each pixel's value, constrained between 0 and 1 by the sigmoid function, signifies the likelihood of belonging to the target class, thus facilitating precise segmentation outcomes crucial for the accurate identification and localisation of objects within images. This design embodies the integration of spectral and spatial information, pivotal for advancing segmentation tasks in complex imaging scenarios, as exemplified in the hybrid use of *VNIR* and *SWIR* data streams within the model's architecture.

In an embodiment of the present invention, the DNN 102 is trained and optimised to achieve the highest levels of accuracy and efficiency in segmenting plant images. A critical component of training is division of the dataset, into an 80:20 ratio for training and testing purposes, respectively. This split has been chosen after careful consideration, as it offers a balanced approach that allows ample data for the model's training phase while ensuring a significant amount of unseen data for a robust evaluation of the model's performance. The 80:20 ratio is widely regarded as an effective balance for ML projects, providing sufficient training data to avoid underfitting (when the model 108 is unable to capture the relationship between the input and output variables accurately) while retaining enough test data to accurately indicate the model's generalisation capability on new, unseen data. This partitioning strategy thus enables to maximise the use of dataset, ensuring comprehensive training and thorough performance evaluation without compromising the model's ability to generalise to new examples.

To fine-tune the model 108, a dynamic training regime has been adopted, where the network is trained for different epochs, including 5, 25, and 50. This approach helps in determining the optimal duration for convergence without overfitting (model 108 giving accurate predictions for training data but not for new data) and assessing the model's learning progression over various lengths of training.

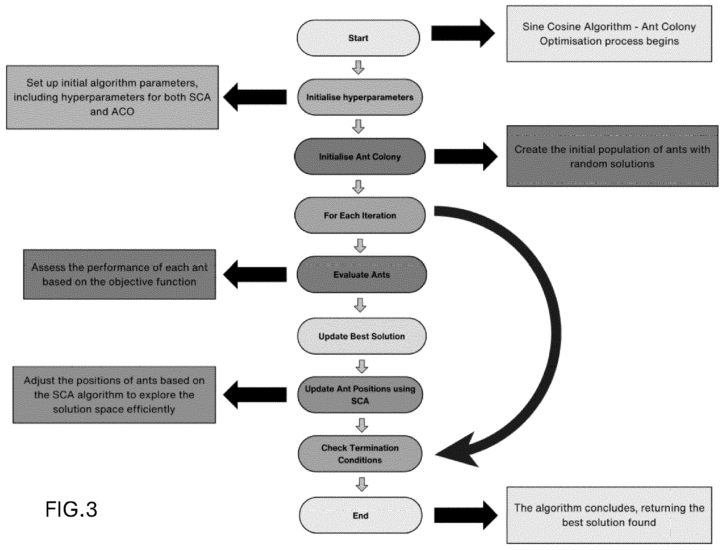

FIG.3 illustrates an overview of the operation of the SCA-ACO algorithm used for optimization of the hyperparameters of the DNN model 108, in accordance with an embodiment of the present invention. The optimisation refers to optimising/perfecting the parameters of the network which is normally done after training.

For optimisation, a new novel approach has been developed that combines the strengths of the Sine Cosine Algorithm (SCA) and Ant Colony Optimisation (ACO) to enhance the process of hyperparameter optimisation in the DNN model 108. It is to be noted that any hyperparameter of the network can be optimized. However, it depends on the number of resources the user has, and how long they want to dedicate to training the network. The greater the number of hyperparameters, the greater the time it will take to train. The goal of any optimisation technique is to exhaust all possible combinations of hyperparameters. For example, number of layers, number of filters per layer, filter size, pooling size, stride size, activation functions, learning rate, dropout rates, etc . This integration is designed to exploit the global search capabilities of SCA alongside the thorough local search proficiency of ACO, thereby ensuring a comprehensive exploration and exploitation of the search space. The overarching goal is to identify the optimal set of hyperparameters that maximise the performance of DNN, particularly for complex tasks such as image segmentation.

The SCA component initiates the optimisation process by performing a broad, global search across the hyperparameter space. It uses mathematical models based on sine and cosine functions to update the positions of potential solutions, simulating a dynamic and adaptive search behaviour. These updates may be guided by the objective function, which can be a measure of model accuracy or inverse loss (in this networks case it adapts to the networks validation loss), allowing the algorithm to navigate towards regions of the search space that promise improved model performance. The inherent flexibility of SCA in balancing exploration (searching new areas) and exploitation (refining known good areas) makes it exceptionally effective at avoiding local optima and identifying promising regions for further investigation. The core principle of SCA revolves around updating the positions of solutions based on the sine and cosine functions, aiming to explore (global search) and exploit (local search) the search space. A search space refers to the range of possible solutions or configurations that the optimization process can explore to find the best or most optimal solution. For SCA-ACO, this involves both algorithms working together to navigate and evaluate different areas within this space, aiming to identify the configuration that yields the best performance. The position of each solution *Xᵢ* at iteration *t* + 1 may be updated as follows: $\begin{matrix}{X}_{i}^{\left(t+1\right)} = {X}_{i}^{\left(t\right)} + a ⋅ {r}_{1} ⋅ sin \left({r}_{2}\right) ⋅ \left|{r}_{3}⋅{X}_{target}^{\left(t\right)}-{X}_{i}^{\left(t\right)}\right| \\ {X}_{i}^{\left(t+1\right)} = {X}_{i}^{\left(t\right)} + a ⋅ {r}_{1} ⋅ cos \left({r}_{2}\right) ⋅ \left|{r}_{3}⋅{X}_{target}^{\left(t\right)}-{X}_{i}^{\left(t\right)}\right|\end{matrix}$ (13)

Where:
- ${X}_{i}^{\left(t+1\right)}$ represents the position of the *i^{th}* solution at iteration *t +* 1.
- ${X}_{i}^{\left(t\right)}$ is the current position of the *i^{th}* solution at iteration *t.*
- ${X}_{target}^{\left(t\right)}$ denotes the position of the target or the current best solution found so far.
- *r*₁, *r*₂ and *r*₃ are random numbers in the range [0, *1*]
- *a* is a constant that decreases over time to reduce the search space and concentrate on exploitation.
- sin (·) and cos (·) are the sine and cosine functions, respectively, which introduce a stochastic element to the direction and magnitude of the search steps, facilitating both global (exploration) and local (exploitation) search capabilities.

In the SCA-ACO framework, global search involves the exploration of the entire search space to identify broad areas that may contain optimal solutions, and leveraging the SCAs ability to dynamically adjust exploration patterns to cover vast areas efficiently. The local search on the other hand, focuses on thoroughly exploring these identified areas to fine-tune the solutions, using the ACOs mechanism of following pheromone trails to intensively search near promising solutions. This combination allows SCA-ACO to balance between broadly identifying promising regions and meticulously optimizing within those regions, aiming to find the best overall solution without getting trapped in local optima.

The SCA-ACO algorithm optimises hyperparameters within the proposed neural network framework, focusing on minimising the validation loss. Within this algorithmic structure, an 'ant colony' is conceptualised as a variety of solution vectors, each corresponding to a distinct set of hyperparameters. Each 'ant' position within this multidimensional parameter space signifies a unique hyperparameter combination. For the network, a unique set of hyperparameters that an 'ant' might explore in the SCA-ACO optimization process may include:
- Number of layers and 5 encoder-decoder pairs
- Number of Filters per Layer: Starting with 32 and doubling after each downsampling in the encoder, then halving after each up-sampling in the decoder
- Filter Size: 3x3 for convolutional layers
- Pooling Size: 2x2 for max pooling operations in the encoder
- Stride Size: 2 for pooling operations, 1 for convolutional layers
- Activation Functions: ReLU for intermediate layers, Sigmoid for the final layer
- Learning Rate: 0.001
- Batch Size: 16
- Number of Epochs: 100
- Dropout Rate: 0.5 after each up-sampling in the decoder

The above-mentioned combinations represent one potential point in the multidimensional parameter space that an 'ant' might explore to find an optimal or near-optimal set of hyperparameters for training the network.

The SCA mechanism plays a pivotal role in directing the trajectory of these solutions within the search space. It employs sine and cosine mathematical functions as tools to achieve an equilibrium between two vital operational strategies: 'exploration', which entails the investigation of novel areas within the parameter space, and 'exploitation', which involves the refinement and optimisation within known promising regions.

Throughout iterative cycles, each 'ant' adjusts its position in response to its experimental learning and the collective intelligence accumulated by the colony, represented by the most productive solution discovered thus far. This adaptive process is governed by the underlying dynamics of the SCA algorithm, promoting a search strategy that is both diverse and targeted. Furthermore, an integral component of this algorithm is the evaluation of the 'fitness' of each ant's position, quantified in terms of the validation loss. This evaluation is conducted by applying the proposed neural network on validation datasets, thus aligning the optimisation process closely with the network's performance in practical scenarios.

Following the global search phase by SCA, the ACO component takes over to conduct a detailed local search within the promising regions identified. Inspired by the foraging behaviour of ants, the ACO uses a pheromone-based learning mechanism to guide the search process.

In the real world, the ants use trail pheromones to help other members of the colony get from their nest to a food source and return to the nest again in an efficient manner. In ACO, this concept is applied to optimization problems, where virtual ants leave a pheromone trail on paths that lead to good solutions, marking these paths as promising for future exploration. Pheromone-based learning refers to the process through which the algorithm adjusts the strength of the pheromone trails based on the quality of the solutions found, basically encouraging the algorithm to explore areas of the search space more intensively where higher-quality solutions have been identified. It allows the collective search effort to converge on optimal or near-optimal solutions over time, as paths leading to less successful outcomes gradually receive less attention due to pheromone evaporation. Sure, after the SCA identifies promising areas in the search, the ACO kicks in to explore these areas more closely. Just like ants searching for food, ACO uses virtual pheromones to mark paths that lead to good solutions. Solutions that perform well leave behind a stronger pheromone trail, signalling to other virtual ants that this path is worth following. This approach helps zoom in on the best solutions, refining the search within the areas that have already been identified as promising. The strength of the pheromone trails is adjusted over time, with less promising paths fading away, like how real ants would concentrate their efforts on the most rewarding routes and abandon less successful ones.

The solutions that yield superior performance, as evaluated by the objective function, leave behind a stronger pheromone trail, indicating more desirable paths through the hyperparameter space. This method ensures a focused exploration of areas surrounding high-performing solutions, enabling the fine-tuning of hyperparameters to achieve optimal or near-optimal configurations. The pheromone level on the path *i*, *j* at time *t +* 1 is updated based on the evaporation rate and the pheromone laid down by ants as: ${τ}_{ij} \left(t+1\right) = \left(1-ρ\right) ⋅ {τ}_{ij} \left(t\right) + {Δτ}_{ij}$ (14)

Where:
- τ*ᵢⱼ*(*t*) is the amount of pheromone on path *i, j* at time *t.*
- ρ is the pheromone evaporation coefficient, 0 < ρ < 1.
- Δτ*ᵢⱼ* is the amount of pheromone deposited, typically related to the quality of the solution.

Using the probabilistic selection rule, ants choose the next node to visit based on the probability which is a function of the amount of pheromone and the heuristic desirability (η*ᵢⱼ*) of moving to the next node: ${p}_{ij}^{k} \left(t\right) = \frac{{\left[{τ}_{ij}\left(t\right)\right]}^{α} ⋅ {\left[{η}_{ij}\right]}^{β}}{\sum {\left[{τ}_{ij}\left(t\right)\right]}^{α} ⋅ {\left[{η}_{ij}\right]}^{β}}$ (15)

Where:
- ${p}_{ij}^{k} \left(t\right)$ is the probability of ant *k* moving from node *i* to node *j* at time *t.*
- *α* and *β* are parameters that control the relative importance of pheromone trail strength (τ) and the heuristic information (η), respectively.
- The denominator is the sum of the products of pheromone trail strength and heuristic information for all feasible moves from node i.

As the ants progress through the network, paths with higher pheromone levels and desirability are more likely to be chosen, promoting the exploration of promising areas in the solution space based on collective learning and feedback.

The synergy between SCA and ACO in our hybrid network lies in their complementary search strategies. While SCA provides a macro-level overview by identifying valuable regions in the hyperparameter landscape of the DNN, ACO delves into these regions at a micro-level, exploiting the accumulated knowledge to uncover the best possible configurations of the network (e.g., number of layers or features). This dual-phase approach ensures that the algorithm not only discovers promising areas quickly but also thoroughly optimises within those areas, significantly enhancing the effectiveness of the hyperparameter optimisation process.

Thus, the SCA-ACO process begins with the initialisation of both the hyperparameters and the ant colony. As the process begins iterating, ants are evaluated based on the objective function. If a good performance is observed, the best solution is updated and the position of the ants are recorrected via the SCA component. After each iteration, the optimization loop may check and confirm if the termination clause has been triggered (best model parameters found), if so, then the process will end.

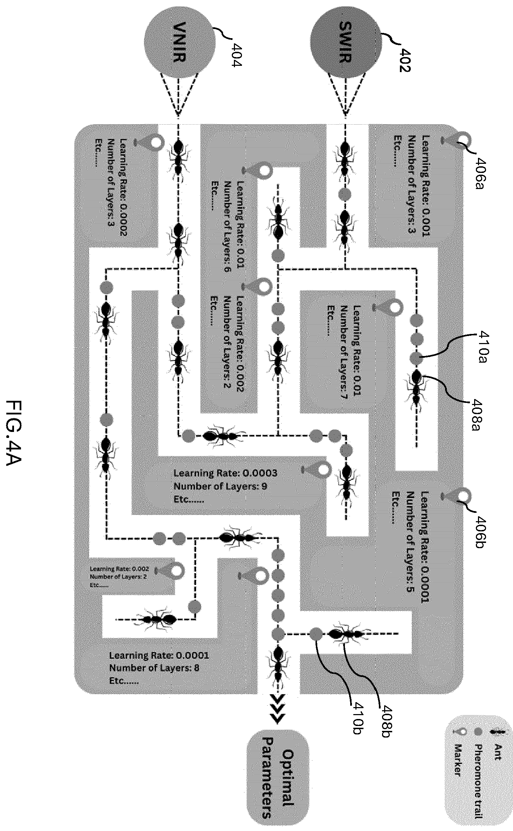

FIG.4A illustrates the visualisation of the operation of the sine cosine algorithm with ant colony optimisation (SCA-ACO). The network's segmentation architecture receives hyperspectral imaging data through two separate SWIR and VNIR channels 402 and 404. Following entry into the network, the SCA-ACO algorithm controls all network hyperparameters and adjusts the network's shape and size based on performance metrics during training. The SCA component iteratively marks network locations 406a and 406b, each indicated by a geolocation symbol. These locations represent hyperparameter combinations that can be used to train the network and enhance/reduce its performance. The ants 408a and 408b (represented by a graphic of an ant) continuously explore the network and converge upon locations 406a and 406b marked by the SCA. Upon reaching a marked location, an ant assesses the performance of the hyperparameter combination and ranks it by leaving a pheromone trail 410a and 410b (shown by small circles). However, some hyperparameter combinations may lead to dead ends, indicating poor performance, while others may lead to better routes, signifying improved but not optimal performance. Ultimately, the hyperparameter combination with the highest level of pheromone leads to the optimal hyperparameter combination.

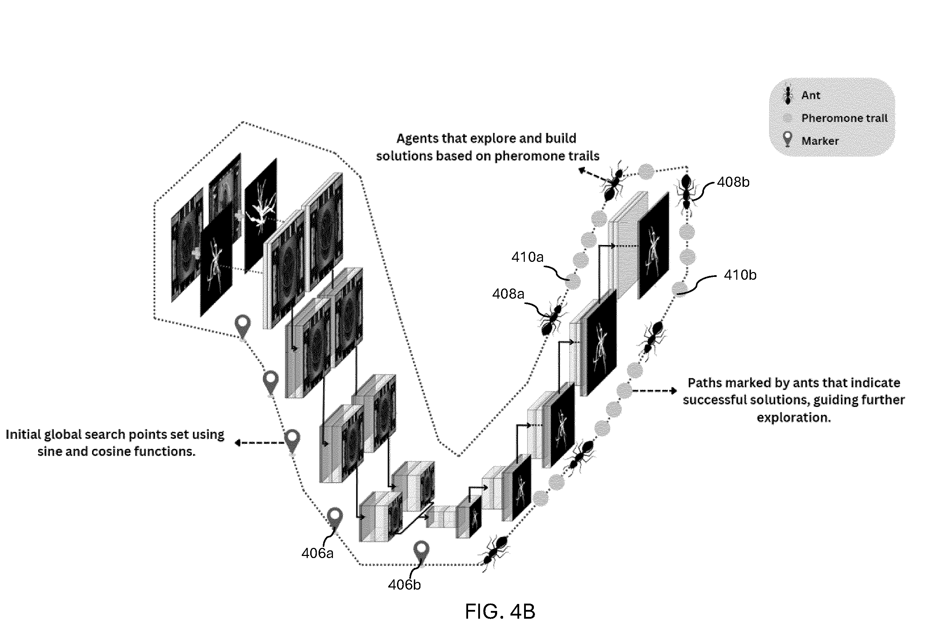

FIG.4B illustrates an overview of how the sine cosine algorithm with ant colony optimisation (SCA-ACO) operates within a hybrid segmentation architecture to optimise both global and local hyperparameters, ensuring optimal network performance regardless of data type. This hybrid approach allows the SCA-ACO to autonomously restructure the network by altering parameters such as the number of layers or the number of features per layer. The SCA-ACO algorithm achieves this combined optimisation process by working together on a single task, each with a specific role. The SCA component performs global searches across the entire network to identify promising hyperparameter combinations 406a and 406b. The ACO component then focuses on these marked positions at a local level. The ants 408a and 408b test the performance of the hyperparameter combinations at these locations. Based on the results, the ants 408a and 408b leave behind pheromone trails 410a and 410b, which represent a ranking of the tested hyperparameter combinations. This iterative process continues until the optimal set of hyperparameters is found, ensuring the network is configured for maximum performance. The combined efforts of SCA and ACO allow for thorough and efficient exploration and exploitation of the hyperparameter space, leading to a finely tuned segmentation architecture.

In an embodiment of the present invention, a checkpointing process has also been implemented to enhance the training strategy of the model 108, which saves the model at intervals when there is an improvement in performance on the validation set. This approach not only provides a safety net against potential overfitting but also allows to retain the best version of the model throughout the training process. There is also employed early stopping, a critical component of optimisation strategy, to prevent overfitting and reduce computational waste. This technique terminates training if the model's performance on the validation set does not improve for a predefined number of epochs, ensuring training efficiency. Finally, to evaluate and optimise the model accurately, custom metrics may be incorporated into the training process, including the dice coefficient (1), intersection over union (IoU) (2), precision (3), and recall (4), which provides a detailed understanding of the model's performance in terms of accuracy and overlap between the predicted and ground truth masks. $DSC \left(A, B\right) = \frac{2 X \left|A∩B\right|}{\left|A\right| + \left|B\right|}$ $IoU = \frac{{Area}_{overlap}}{{Area}_{union}} = \frac{\left|A∩B\right|}{\left|A∪B\right|}$ $Precision = \frac{TP}{TP + FP}$ $Recall = \frac{TP}{TP + FN}$

In addition, a custom version of Dice Loss may be implemented as the network's loss function, selected for its effectiveness in handling the imbalance between the segmented plant regions and the background. By directly optimising for a high Dice Coefficient, this loss function may align the model's training objectives closely with our performance metrics, ensuring a solid correlation between the
loss minimisation and the segmentation quality.

After the training phase, the model 108 may undergo a rigorous testing process. This involves evaluating the model's performance on a separate batch of images, distinct from the training set, to assess its segmentation capabilities and accuracy.

The DNN model 108 may be used for image segmentation in the following areas:
- Crop Monitoring: VNIR and SWIR imaging monitor crop health, identify stress factors, and optimise agricultural practices. These data types aid in precision farming by providing insights into soil composition, water content, and crop health.
- Environmental monitoring: VNIR and SWIR imagery can classify different land cover types, helping in environmental monitoring and resource management. Also, these data may be valuable for assessing forest health, detecting deforestation, and managing natural resources.
- Remote Sensing: VNIR and SWIR data may contribute to urban land cover classification, infrastructure planning, and monitoring changes in urban areas. Also, these data types may assist in disaster response by providing information on the extent of damage caused by events such as floods, wildfires, and earthquakes.
- Geology and Minearlogy: VNIR and SWIR data may be crucial for identifying mineral deposits, mapping geological formations, and assessing the composition of rocks and soils. Also, these imaging techniques may aid in locating and characterising hydrocarbon resources in oil and gas exploration.
- Medical imaging: The VNIR and SWIR can differentiate between healthy and diseased tissues based on their spectral characteristics. Further, certain applications involve using SWIR imaging to detect tumours and abnormalities.
- Military and Defence: The VNIR and SWIR imaging can detect camouflage and differentiate between natural and manufactured structures in military applications. Also, these data types assist in recognising and identifying targets in various terrains and conditions.
- Industrial Inspection: VNIR and SWIR imaging can be used for quality control in manufacturing processes, especially electronics and textiles. These data types help classify materials based on their spectral properties.
- Satellite Imaging: VNIR and SWIR sensors on satellites may provide valuable information for earth observation, climate monitoring, and environmental studies.

In the specification the terms "comprise, comprises, comprised and comprising" or any variation thereof and the terms include, includes, included and including" or any variation thereof are considered to be totally interchangeable, and they should all be afforded the widest possible interpretation and vice versa.

The invention is not limited to the embodiments hereinbefore described but may be varied in both construction and detail.

## Claims

1. A computer-implemented method for performing image segmentation of hyperspectral images, comprising:
capturing a VNIR image of an object using a VNIR image sensor;
capturing a SWIR image of the object using a SWIR image sensor; and
providing a deep learning network (DNN) model;
**characterized in that** the deep learning network model is configured to:
receive the captured VNIR and SWIR images independently through two inputs of a dual-input channel;
encode the VNIR image through a VNIR encoding path to perform feature extraction and generate corresponding VNIR feature map;
encode the SWIR image through a SWIR encoding path to perform feature extraction and generate corresponding SWIR feature map;
combine the VNIR and SWIR feature maps through a fusion layer, to generate a fusion feature map, wherein the fusion feature map is generated by performing element-wise addition of the VNIR and SWIR feature maps;
decode the fusion feature map through a single decoding path that includes a series of deconvolution blocks; and
generate a binary segmentation map by an output layer based on the decoded feature map, wherein the binary segmentation map enables per-pixel classification for delineating foreground from background of the object.

2. The computer-implemented method as claimed in claim 1, wherein each of the VNIR and SWIR encoding paths includes a series of convolutional blocks to break down the features of respective captured image, and wherein each encoder block performs a depth-wise spatial convolution followed by a point-wise convolution.

3. The computer-implemented method as claimed in any preceding claim, wherein each input channel of the dual-input channel receives an RGB image of dimensions *Hx Wx C* and a binary mask of the RGB image of dimensions *Hx Wx* 1, wherein *C* is the number of channels.

4. The computer-implemented method as claimed in any preceding claim further comprising providing spatial and channel attention mechanisms in each block of the encoding and decoding paths, wherein the spatial attention mechanism focusses on one or more essential features in the spatial domain, and the channel attention mechanism focusses on one or more informative features in feature channels.

5. The computer-implemented method as claimed in any preceding claim further comprising providing an edge detection block in a final convolution block of each encoding path for processing the feature maps to emphasize edges of the object and precisely delineating boundaries of the object.

6. The computer-implemented method as claimed in any preceding claim further comprising providing a squeeze and excite (SE) block in the fusion layer, wherein the SE block performs a squeeze operation that aggregates spatial information of feature channels into a single vector and an excitation operation that learns a non-linear interaction between feature channels, and recalibrates the channel-wise feature responses.

7. The computer-implemented method as claimed in any preceding claim further comprising generating one or more optimal configurations of one or more hyperparameters of the DNN model during training, through SCA-ACO optimisation process, wherein the hyperparameters include number of convolutional layers, number of filters per layer, pooling size, stride size, activation functions, learning rate, layer configurations, and dropout rates, and wherein the SCA mechanism performs a broad global search across hyperparameter space, and uses mathematical models based on sine and cosine functions to update positions of one or more optimal configurations by minimizing validation loss of the DNN model.

8. The computer-implemented method as claimed in claim 7, wherein the ACO mechanism conducts a detailed local search within the one or more optimal configurations identified by the SCA component based on the pheromone-based learning mechanism, wherein the ACO mechanism conceptualises an ant colony as a set of solution vectors, each corresponding to a distinct set of hyperparameters, and wherein each ant position within the multidimensional parameter space signifies a unique optimal configuration, and wherein throughout a plurality of iterative cycles, each ant adjusts respective position in response to experimental learning and collective intelligence accumulated by the colony.

9. The computer-implemented method as claimed in any preceding claim further comprising using a top-view line scanning VNIR imaging sensor for creating hyperspectral cubes of the object using a push-broom technique, wherein the VNIR imaging sensor captures wavelengths ranging from 380 to 900nm on the electromagnetic spectrum.

10. The computer-implemented method as claimed in any preceding claim further comprising using a top-down line scanning SWIR imaging sensor for creating hypercubes using a push-broom technique, wherein the SWIR imaging sensor captures wavelengths ranging from 900 to 1700nm in the electromagnetic spectrum.

11. The computer-implemented method as claimed in any preceding claim further comprising performing image augmentation of a pre-defined number of VNIR and SWIR images to artificially increase the total images for training of the DNN model, wherein the image augmentation is performed by applying a series of transformations including rotation, flipping, scaling, shifts, and cropping.

12. A system for performing image segmentation of hyperspectral images, comprising:
a memory to store the one or more instructions;
a processor to execute the one or more instructions to:
capture a VNIR image of an object using a VNIR image sensor;
capture a SWIR image of the object using a SWIR image sensor; and
provide a deep learning network (DNN) model;
**characterized in that** the deep learning network model is configured to:
receive the captured VNIR and SWIR images independently through two inputs of a dual-input channel;
encode the VNIR image through a VNIR encoding path to perform feature extraction and generate corresponding VNIR feature map;
encode the SWIR image through a SWIR encoding path to perform feature extraction and generate corresponding SWIR feature map;
combine the VNIR and SWIR feature maps through a fusion layer, to generate a fusion feature map, wherein the fusion feature map is generated by performing element-wise addition of the VNIR and SWIR feature maps;
decode the fusion feature map through a single decoding path that includes a series of deconvolution blocks; and
generate a binary segmentation map by an output layer based on the decoded feature map, wherein the binary segmentation map enables per-pixel classification for delineating foreground from background of the object.

## Patentansprüche

1. Computerimplementiertes Verfahren zum Durchführen einer Bildsegmentierung hyperspektraler Bilder, umfassend:
Erfassen eines VNIR-Bildes eines Objekts unter Verwendung eines VNIR-Bildsensors;
Erfassen eines SWIR-Bildes des Objekts unter Verwendung eines SWIR-Bildsensors; und
Bereitstellen eines Deep-Learning-Netzwerk-(DNN)-Modells;
**dadurch gekennzeichnet, dass** das Deep-Learning-Netzwerk-Modell zu Folgendem konfiguriert ist:
Empfangen der erfassten VNIR- und SWIR-Bilder unabhängig voneinander durch zwei Eingaben eines Kanals mit zwei Eingängen;
Codieren des VNIR-Bildes durch einen VNIR-Codierungspfad, um eine Merkmalsextraktion durchzuführen und eine entsprechende VNIR-Merkmalskarte zu erzeugen;
Codieren des SWIR-Bildes durch einen SWIR-Codierungspfad, um eine Merkmalsextraktion durchzuführen und eine entsprechende SWIR-Merkmalskarte zu erzeugen;
Kombinieren der VNIR- und der SWIR-Merkmalskarte durch eine Fusionsschicht, um eine Fusionsmerkmalskarte zu erzeugen, wobei die Fusionsmerkmalskarte erzeugt wird, indem eine elementweise Addition der VNIR- und der SWIR-Merkmalskarte durchgeführt wird;
Decodieren der Fusionsmerkmalskarte durch einen einzigen Decodierungspfad, der eine Reihe von Dekonvolutionsblöcken einschließt; und
Erzeugen einer binären Segmentierungskarte durch eine Ausgabeschicht auf der Grundlage der decodierten Merkmalskarte, wobei die binäre Segmentierungskarte eine Klassifizierung auf Pixelbasis ermöglicht, um einen Vordergrund von einem Hintergrund des Objekts abzugrenzen.

2. Computerimplementiertes Verfahren nach Anspruch 1, wobei jeder von dem VNIR- und dem SWIR-Codierungspfad eine Reihe von Faltungsblöcken einschließt, um die Merkmale des jeweiligen erfassten Bildes zu unterteilen, und wobei jeder Codierungsblock eine tiefenmäßige räumliche Faltung, gefolgt von einer punktmäßigen Faltung, durchführt.

3. Computerimplementiertes Verfahren nach einem vorstehenden Anspruch, wobei jeder Eingabekanal des Kanals mit zwei Eingängen ein RGB-Bild mit den Abmessungen *HxWxC* und eine binäre Maske des RGB-Bildes mit den Abmessungen *HxWx*1 empfängt, wobei C die Anzahl von Kanälen ist.

4. Computerimplementiertes Verfahren nach einem vorstehenden Anspruch, weiter umfassend das Bereitstellen von räumlichen und Kanal-Attention-Mechanismen in jedem Block des Codierungs- und Decodierungspfads, wobei der räumliche Attention-Mechanismus auf ein oder mehrere wesentliche Merkmale im räumlichen Bereich fokussiert und der Kanal-Attention-Mechanismus auf ein oder mehrere Informationsmerkmale in den Merkmalskanälen fokussiert.

5. Computerimplementiertes Verfahren nach einem vorstehenden Anspruch, weiter umfassend das Bereitstellen eines Kantenerfassungsblocks in einem Endfaltungsblock jedes Codierungspfads zum Verarbeiten der Merkmalskarten, um Kanten des Objekts zu betonen und Grenzen des Objekts genau abzugrenzen.

6. Computerimplementiertes Verfahren nach einem vorstehenden Anspruch, weiter umfassend das Bereitstellen eines Squeeze-and-Excite- (SE-) Blocks in der Fusionsschicht, wobei der SE-Block einen Squeeze-Vorgang durchführt, der räumliche Informationen von Merkmalskanälen in einen einzigen Vektor aggregiert, sowie einen Excitation-Vorgang, der eine nichtlineare Interaktion zwischen Merkmalskanälen erlernt und die kanalmäßigen Merkmalsantworten rekalibriert.

7. Computerimplementiertes Verfahren nach einem vorstehenden Anspruch, weiter umfassend das Erzeugen einer oder mehrerer optimaler Konfigurationen eines oder mehrerer Hyperparameter des DNN-Modells während des Trainings durch einen SCA-ACO-Optimierungsprozess, wobei die Hyperparameter eine Anzahl von Faltungsschichten, Anzahl von Filtern pro Schicht, Pooling-Größe, Schrittgröße, Aktivierungsfunktionen, Lernrate, Schichtenkonfigurationen und Ausfallraten einschließen, und wobei der SCA-Mechanismus eine breite globale Suche über den Hyperparameterraum hinweg durchführt und mathematische Modelle, die auf Sinus- und Cosinus-Funktionen basieren, verwendet, um Positionen einer oder mehrerer optimaler Konfigurationen durch Minimieren von Validierungsverlust des DNN-Modells zu aktualisieren.

8. Computerimplementiertes Verfahren nach Anspruch 7, wobei der ACO-Mechanismus eine detaillierte lokale Suche innerhalb der einen oder mehreren optimalen Konfigurationen, die von der SCA-Komponente identifiziert werden, auf der Grundlage des pheromonbasierten Lernmechanismus durchführt, wobei der ACO-Mechanismus eine Ameisenkolonie als einen Satz von Lösungsvektoren konzeptualisiert, die jeweils einem unterschiedlichen Satz von Hyperparametern entsprechen, und wobei jede Ameisenposition innerhalb des multidimensionalen Parameterraums eine eindeutige optimale Konfiguration darstellt, und wobei während einer Vielzahl von iterativen Zyklen jede Ameise eine jeweilige Position als Reaktion auf experimentelles Lernen und kollektive Intelligenz, die von der Kolonie angesammelt wird, anpasst.

9. Computerimplementiertes Verfahren nach einem vorstehenden Anspruch, weiter umfassend das Verwenden eines VNIR-Bildgebungssensors mit Linienabtastung in Draufsicht zum Erzeugen von hyperspektralen Würfeln des Objekts unter Verwendung einer Push-broom-Technik, wobei der VNIR-Bildgebungssensor Wellenlängen erfasst, die von 380 bis 900 nm auf dem elektromagnetischen Spektrum reichen.

10. Computerimplementiertes Verfahren nach einem vorstehenden Anspruch, weiter umfassend das Verwenden eines SWIR-Bildgebungssensors mit Linienabtastung von oben nach unten zum Erzeugen von Hyperwürfeln unter Verwendung einer Push-broom-Technik, wobei der SWIR-Bildgebungssensor Wellenlängen erfasst, die von 900 bis 1700 nm auf dem elektromagnetischen Spektrum reichen.

11. Computerimplementiertes Verfahren nach einem vorstehenden Anspruch, weiter umfassend das Durchführen einer Bildvergrößerung einer vorgegebenen Anzahl von VNIR- und SWIR-Bildern, um die Gesamtzahl von Bildern zum Trainieren des DNN-Modells künstlich zu erhöhen, wobei die Bildvergrößerung durchgeführt wird, indem eine Reihe von Transformationen, einschließlich Drehen, Spiegeln, Skalieren, Verschieben und Zuschneiden, angewendet wird.

12. System zum Durchführen einer Bildsegmentierung hyperspektraler Bilder, umfassend:
einen Speicher zum Speichern einer oder mehrerer Anweisungen;
einen Prozessor zum Ausführen einer oder mehrerer Anweisungen zum:
Erfassen eines VNIR-Bildes eines Objekts unter Verwendung eines VNIR-Bildsensors;
Erfassen eines SWIR-Bildes des Objekts unter Verwendung eines SWIR-Bildsensors; und
Bereitstellen eines Deep-Learning-Netzwerk-(DNN)-Modells;
**dadurch gekennzeichnet, dass** das Deep-Learning-Netzwerk-Modell zu Folgendem konfiguriert ist:
Empfangen der erfassten VNIR- und SWIR-Bilder unabhängig voneinander durch zwei Eingaben eines Kanals mit zwei Eingängen;
Codieren des VNIR-Bildes durch einen VNIR-Codierungspfad, um eine Merkmalsextraktion durchzuführen und eine entsprechende VNIR-Merkmalskarte zu erzeugen;
Codieren des SWIR-Bildes durch einen SWIR-Codierungspfad, um eine Merkmalsextraktion durchzuführen und eine entsprechende SWIR-Merkmalskarte zu erzeugen;
Kombinieren der VNIR- und der SWIR-Merkmalskarte durch eine Fusionsschicht, um eine Fusionsmerkmalskarte zu erzeugen, wobei die Fusionsmerkmalskarte erzeugt wird, indem eine elementweise Addition der VNIR- und der SWIR-Merkmalskarte durchgeführt wird;
Decodieren der Fusionsmerkmalskarte durch einen einzigen Decodierungspfad, der eine Reihe von Dekonvolutionsblöcken einschließt; und
Erzeugen einer binären Segmentierungskarte durch eine Ausgabeschicht auf der Grundlage der decodierten Merkmalskarte, wobei die binäre Segmentierungskarte eine Klassifizierung auf Pixelbasis ermöglicht, um einen Vordergrund von einem Hintergrund des Objekts abzugrenzen.

## Revendications

1. Procédé mis en œuvre par ordinateur pour réaliser une segmentation d'images hyperspectrales, comprenant :
la capture d'une image VNIR d'un objet en utilisant un capteur d'image VNIR ;
la capture d'une image SWIR de l'objet en utilisant un capteur d'image SWIR ; et
la fourniture d'un modèle de réseau d'apprentissage profond (DNN) ; **caractérisé en ce que** le modèle de réseau d'apprentissage profond est configuré pour :
recevoir les images VNIR et SWIR capturées indépendamment par l'intermédiaire de deux entrées d'un canal à double entrée ;
encoder l'image VNIR par l'intermédiaire d'une voie d'encodage VNIR pour réaliser une extraction de caractéristiques et générer la carte de caractéristiques VNIR correspondante ;
encoder l'image SWIR par l'intermédiaire d'une voie d'encodage SWIR pour réaliser une extraction de caractéristiques et générer la carte de caractéristiques SWIR correspondante ;
combiner les cartes de caractéristiques VNIR et SWIR par l'intermédiaire d'une couche de fusion, pour générer une carte de caractéristiques de fusion, dans lequel la carte de caractéristiques de fusion est générée par la réalisation d'une addition élément par élément des cartes de caractéristiques VNIR et SWIR ;
décoder la carte de caractéristiques de fusion par l'intermédiaire d'une voie de décodage unique qui inclut une série de blocs de déconvolution ; et
générer une carte de segmentation binaire par une couche de sortie sur la base de la carte de caractéristiques décodée, dans lequel la carte de segmentation binaire permet une classification pixel par pixel pour délimiter le premier plan de l'arrière-plan de l'objet.

2. Procédé mis en œuvre par ordinateur selon la revendication 1, dans lequel chacune des voies d'encodage VNIR et SWIR inclut une série de blocs convolutionnels pour décomposer les caractéristiques de l'image capturée respective, et dans lequel chaque bloc encodeur réalise une convolution spatiale en profondeur suivie d'une convolution ponctuelle.

3. Procédé mis en œuvre par ordinateur selon l'une quelconque des revendications précédentes, dans lequel chaque canal d'entrée du canal à double entrée reçoit une image RVB de dimensions *Hx Wx C* et un masque binaire de l'image RVB de dimensions *Hx Wx* 1, dans lequel *C* est le nombre de canaux.

4. Procédé mis en œuvre par ordinateur selon l'une quelconque des revendications précédentes comprenant en outre la fourniture, dans chaque bloc des voies d'encodage et de décodage, de mécanismes d'attention spatiale et d'attention des canaux, dans lequel le mécanisme d'attention spatiale se focalise sur une ou plusieurs caractéristiques essentielles dans le domaine spatial, et le mécanisme d'attention des canaux se focalise sur une ou plusieurs caractéristiques informatives dans les canaux de caractéristiques.

5. Procédé mis en œuvre par ordinateur selon l'une quelconque des revendications précédentes comprenant en outre la fourniture d'un bloc de détection de contours dans un bloc convolutionnel final de chaque voie d'encodage pour traiter les cartes de caractéristiques afin d'accentuer les contours de l'objet et de délimiter précisément les limites de l'objet.

6. Procédé mis en œuvre par ordinateur selon l'une quelconque des revendications précédentes comprenant en outre la fourniture d'un bloc squeeze-and-excite (SE) dans la couche de fusion, dans lequel le bloc SE réalise une opération dite squeeze qui agrège des informations spatiales de canaux de caractéristiques en un vecteur unique et une opération dite excite qui apprend une interaction non linéaire entre des canaux de caractéristiques, et recalibre les réponses de caractéristiques par canal.

7. Procédé mis en œuvre par ordinateur selon l'une quelconque des revendications précédentes comprenant en outre la génération d'une ou de plusieurs configurations optimales d'un ou de plusieurs hyperparamètres du modèle DNN pendant l'entraînement, par l'intermédiaire d'un processus d'optimisation SCA-ACO, dans lequel les hyperparamètres incluent le nombre de couches convolutionnelles, le nombre de filtres par couche, la taille de pooling, la taille de pas, les fonctions d'activation, le taux d'apprentissage, les configurations de couches, et les taux de dropout, et dans lequel le mécanisme SCA réalise une recherche globale étendue dans l'espace des hyperparamètres, et utilise des modèles mathématiques basés sur des fonctions sinus et cosinus pour mettre à jour les positions d'une ou de plusieurs configurations optimales par la réduction au maximum de la perte de validation du modèle DNN.

8. Procédé mis en œuvre par ordinateur selon la revendication 7, dans lequel le mécanisme ACO mène une recherche locale détaillée au sein des une ou plusieurs configurations optimales identifiées par le composant SCA sur la base du mécanisme d'apprentissage basé sur les phéromones, dans lequel le mécanisme ACO conceptualise une colonie de fourmis comme un ensemble de vecteurs de solution, chacun correspondant à un ensemble distinct d'hyperparamètres, et dans lequel chaque position de fourmi au sein de l'espace paramétrique multidimensionnel signifie une configuration optimale unique, et dans lequel, tout au long d'une pluralité de cycles itératifs, chaque fourmi ajuste une position respective en réponse à un apprentissage expérimental et une intelligence collective accumulée par la colonie.

9. Procédé mis en œuvre par ordinateur selon l'une quelconque des revendications précédentes comprenant en outre l'utilisation d'un capteur d'image VNIR à balayage linéaire en vue de dessus pour créer des cubes hyperspectraux de l'objet en utilisant une technique de balayage en peigne, dans lequel le capteur d'image VNIR capture des longueurs d'onde s'inscrivant dans une plage de 380 à 900 nm sur le spectre électromagnétique.

10. Procédé mis en œuvre par ordinateur selon l'une quelconque des revendications précédentes comprenant en outre l'utilisation d'un capteur d'image SWIR à balayage linéaire de haut en bas pour créer des hypercubes en utilisant une technique de balayage en peigne, dans lequel le capteur d'image SWIR capture des longueurs d'onde s'inscrivant dans une plage de 900 à 1 700 nm dans le spectre électromagnétique.

11. Procédé mis en œuvre par ordinateur selon l'une quelconque des revendications précédentes comprenant en outre la réalisation d'une augmentation d'image d'un nombre prédéfini d'images VNIR et SWIR pour augmenter artificiellement le nombre total d'images pour l'entraînement du modèle DNN, dans lequel l'augmentation d'image est réalisée par l'application d'une série de transformations incluant une rotation, un retournement, une mise à l'échelle, des décalages, et un recadrage.

12. Système pour réaliser une segmentation d'images hyperspectrales, comprenant :
une mémoire pour stocker les une ou plusieurs instructions ;
un processeur pour exécuter les une ou plusieurs instructions pour :
capturer une image VNIR d'un objet en utilisant un capteur d'image VNIR ;
capturer une image SWIR de l'objet en utilisant un capteur d'image SWIR ; et
fournir un modèle de réseau d'apprentissage profond (DNN) ;
**caractérisé en ce que** le modèle de réseau d'apprentissage profond est configuré pour :
recevoir les images VNIR et SWIR capturées indépendamment par l'intermédiaire de deux entrées d'un canal à double entrée ;
encoder l'image VNIR par l'intermédiaire d'une voie d'encodage VNIR pour réaliser une extraction de caractéristiques et générer la carte de caractéristiques VNIR correspondante ;
encoder l'image SWIR par l'intermédiaire d'une voie d'encodage SWIR pour réaliser une extraction de caractéristiques et générer la carte de caractéristiques SWIR correspondante ;
combiner les cartes de caractéristiques VNIR et SWIR par l'intermédiaire d'une couche de fusion, pour générer une carte de caractéristiques de fusion, dans lequel la carte de caractéristiques de fusion est générée par la réalisation d'une addition élément par élément des cartes de caractéristiques VNIR et SWIR ;
décoder la carte de caractéristiques de fusion par l'intermédiaire d'une voie de décodage unique qui inclut une série de blocs de déconvolution ; et
générer une carte de segmentation binaire par une couche de sortie sur la base de la carte de caractéristiques décodée, dans lequel la carte de segmentation binaire permet une classification pixel par pixel pour délimiter le premier plan de l'arrière-plan de l'objet.
